(19) Europäisches Patentamt
European Patent Office
Office européen des brevets

(11) **EP 3 961 320 B1**

(12) **EUROPÄISCHE PATENTSCHRIFT**

(45) Veröffentlichungstag und Bekanntmachung des Hinweises auf die Patenterteilung:
**26.06.2024 Patentblatt 2024/26**

(21) Anmeldenummer: **20192831.4**

(22) Anmeldetag: **26.08.2020**

(51) Internationale Patentklassifikation (IPC):
***G05B 19/19*** *(2006.01)*    ***G05B 19/416*** *(2006.01)*

(52) Gemeinsame Patentklassifikation (CPC):
**G05B 19/416; G05B 19/19;** G05B 2219/41414;
G05B 2219/42156

(54) **VERFAHREN UND EINE EINRICHTUNG ZUR BEWEGUNGSFÜHRUNG EINES BEWEGBAREN MASCHINENELEMENTS EINER MASCHINE**

METHOD AND DEVICE FOR GUIDING THE MOVEMENT OF A MOVABLE MACHINE ELEMENT OF A MACHINE

PROCÉDÉ ET DISPOSITIF DE GUIDAGE DU MOUVEMENT D'UN ÉLÉMENT DE MACHINE MOBILE D'UNE MACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.03.2022 Patentblatt 2022/09**

(73) Patentinhaber: **Siemens Aktiengesellschaft 80333 München (DE)**

(72) Erfinder:
• **Bitterolf, David**
  **91056 Erlangen (DE)**
• **Linke, Hartmut**
  **91056 Erlangen (DE)**
• **Lorz, Fabian Erik**
  **91056 Erlangen (DE)**

(74) Vertreter: **Siemens Patent Attorneys Postfach 22 16 34 80506 München (DE)**

(56) Entgegenhaltungen:
**EP-A1- 2 954 986       DE-A1-102005 048 390
DE-A1-102009 003 919     DE-T5-112006 001 583**

**Beschreibung**

Die Erfindung betrifft ein Verfahren und eine Einrichtung zur Bewegungsführung eines bewegbaren Maschinenelements einer Maschine.

Zur Bewegungsführung eines bewegbaren Maschinenelements einer Maschine, wie z.B. einer Werkzeugmaschine, Produktionsmaschine und/oder einem Roboter ist die Erzeugung von Führungssollgrößen, wie z.B. Solllage, Sollgeschwindigkeit und/oder Sollbeschleunigung als Regelsollgrößen für die mit der Steuerung verbundenen Regelungen zur Regelung der für die Verfahrbewegung des Maschinenelements antreibenden Motoren der Maschine, eine der zentralen Aufgaben der Steuerung. Jede Maschine weist dabei in der Regel mehrere Maschinenachsen auf, wobei jede Maschinenachse im Allgemeinen mit Hilfe eines ihr zugeordneten Motors und weiterer Komponenten, wie z.B. einem Getriebe das bewegbare Maschinenelement in Richtung der Maschinenachse bewegen kann, wobei das Maschinenelement z.B. in Form eines Werkzeugschlittens mit einem eingespannten Werkstück und/oder z.B. in Form eines Werkzeugs vorliegen kann. Der Motor, die weiteren Komponenten und das Maschinenelement stellen dabei an der Bewegung beteiligte Elemente dar.

Heutige Steuerungen berücksichtigen bei der Berechnung der Führungssollgrößen für die einzelnen Maschinenachsen einer Maschine, die Leistungsfähigkeit der betroffenen Maschinenachsen zumeist derart, dass die Führungsgrößen dermaßen erzeugt werden, dass bei der Bewegung des bewegbaren Maschinenelements die zulässigen Grenzwerte nicht überschritten werden. Um darüber hinaus die Anregung kritischer Eigenfrequenzen der an der Bewegung beteiligten Elemente zu vermeiden, werden handelsüblich verschiedene Maßnahmen durchgeführt, die jedoch mit teilweise erheblichen Einbußen an der Dynamik des Bewegungsvorgangs des bewegbaren Maschinenelements verbunden sind. Eine dieser Maßnahmen stellt z.B. die so genannte Ruckbegrenzung dar. Die Änderung der Beschleunigung, d.h. der Ruck, wird entsprechend bestimmter Profile vorgegeben oder innerhalb definierter Schranken gehalten. Insbesondere bei Werkzeugmaschinen wird die Bahngeschwindigkeit der durchzuführenden Bewegung soweit reduziert, bis die Ruckbegrenzungen der einzelnen Maschinenachsen eingehalten werden und der auf der Bahn definierte Bahnruck nicht überschritten wird. Eine gezielte Anpassung an das Schwingungsverhalten ist, insbesondere bei Werkzeugmaschinenanwendungen, somit nur sehr eingeschränkt möglich. Für eine hinreichende Fertigungsgenauigkeit muss der Ruck stark reduziert werden, so dass die Dynamik wesentlich beschränkt wird, was zu höheren Fertigungskosten führt.

Eine weitere bekannte Möglichkeit stellt die Verwendung von so genannten Kurvenscheiben dar. Bei vielen Anwendungen, insbesondere bei Produktionsmaschinen, werden die einzelnen Werte der Führungssollgrößen anhand von Kurvenscheiben generiert. Die Kurvenscheibenverläufe setzen sich dabei aus Polynomen zusammen. Eine geringe Schwingungsanregung soll dabei z.B. mittels heuristischer Festlegung erreicht werden (Kurvenscheiben möglichst "weich", Verwendung vom Polynomen hoher Ordnung). Mit einer Anpassung an das mechanische Schwingungsverhalten der an der Bewegung beteiligten Elemente kann eine entsprechende Verlangsamung des Prozesses verbunden sein, was ebenfalls schon die oben genannten Nachteile mit sich bringt.

Eine weitere bekannte Möglichkeit zur Reduktion der Schwingungsbelastung stellen so genannte lineare Führungssollgrö-ßenfilter dar. Mittels linearer Filter werden dabei die spektralen Anteile im Bereich kritischer Frequenzen vermindert. Mit einer solchen Filterung ist jedoch immer eine Signalverzögerung verbunden. Insbesondere bei Werkzeugmaschinen entstehen dadurch Ungenauigkeiten in der Fertigung.

Die Druckschrift DE 10 2005 036 848 offenbart ein Verfahren und eine Einrichtung zur Bewegungsführung eines bewegbaren Maschinenelements einer Maschine. Bei diesen Verfahren wird z.B. bei Eingabe der Endlage und/oder Anfangslage einer durchzuführenden Verfahrbewegung des Maschinenelements eine optimierte Verfahrbewegung des bewegbaren Maschinenelements anhand eines Modells, eines vorgegebenen Gütefunktionals und von Beschränkungen der Verfahrbewegung der Maschinenachse bestimmt.

Die Druckschrift EP 2 690 513 A1 offenbart Verfahren zur Überprüfung der Leistungsfähigkeit der Komponenten einer Maschine oder Anlage, bei denen eine Frequenzanalyse der Maschine durchgeführt wird, welche dann mit einem auf Modell-Parametern wie Massenträgheiten, Federsteifigkeiten und Dämpfungswerten fußenden dynamischen Modell der Maschine zur Erkennung von Abweichungen im Sollbetriebszustand der Maschine verglichen wird.

Die Druckschrift EP 2 634 657 A1 offenbart ein numerisches Steuerungsverfahren, welches eine Servosteuereinheit zum Antreiben einer Vorschubachse einer Werkzeugmaschine verwendet und bei welchem eine Regelungstransferfunktion eine Betriebslage der Servosteuereinheit modelliert.

Die Druckschrift DE 10 2005 048 390 A1 offenbart ein Verfahren zur Bewegungsführung eines bewegbaren Maschinenelements einer Maschine, bei dem Führungsistgrößen aus einer einen gewünschten Bewegungsvorgang des Maschinenelements beschreibenden Führungssollgröße mithilfe eines Streckenmodells gewonnen werden. Das Streckenmodell bildet das dynamische Verhalten der an der Bewegung beteiligten Maschinenelemente nach und fußt auf physikalischen Modell-Parametern wie Massenträgheiten, Federsteifigkeiten und Dämpfungswerten.

Ausgehend von der Lehre der Druckschrift DE 10 2005 048 390 A1 liegt der Erfindung die Aufgabe zugrunde, das Auffinden von Einstellungen des Streckenmodells zur Ermöglichung einer optimierten Bewegungsführung eines bewegbaren Maschinenelements einer Maschine zu erleichtern.

Diese Aufgabe wird gelöst durch ein Verfahren zur Bewegungsführung eines mithilfe eines Motors über eine Achse antreibbaren Maschinenelements einer Maschine. Das Verfahren umfasst die Schritte des Vorgebens einer einen gewünschten Bewegungsvorgang des Maschinenelements beschreibenden Führungssollgrö-ße für die Ansteuerung des Motors, sowie des Bestimmens einer Vorsteueristgröße und/oder einer Führungsistgröße aus der Führungssollgröße durch Unterwerfen der Führungssollgröße einem digitalen Streckenmodell, welches das dynamische Verhalten des Maschinenelements und des Motors nachbildet. Das Verfahren kennzeichnet sich durch die Tatsache, dass das digitale Streckenmodell durch das Gesamtträgheitsmoment sowie die Polstellen und die Nullstellen der Übertragungsfunktion des mechanischen Systems aus Motor, Achse und Maschinenelement parametrisiert ist.

Weiterhin wird diese Aufgabe gelöst durch eine Maschine, wie beispielsweise eine Werkzeugmaschine, eine Produktionsmaschine oder einen Roboter, mit einem Motor, mindestens einem bewegbaren Maschinenelement, welches mit dem Motor über eine Achse gekoppelt ist und dessen Bewegung durch den Motor steuerbar ist, und einer numerischen Maschinensteuereinrichtung. Die Maschinensteuereinrichtung ist einerseits dazu ausgelegt, eine einen gewünschten Bewegungsvorgang des Maschinenelements beschreibende Führungssollgröße für die Ansteuerung des Motors auszugeben. Andererseits ist die Maschinensteuereinrichtung dazu ausgelegt, eine Vorsteueristgröße und/oder eine Führungsistgröße aus der Führungssollgröße durch Unterwerfen der Führungssollgröße einem digitalen Streckenmodell zu bestimmen. Das digitale Streckenmodell bildet das dynamische Verhalten des Maschinenelements und des Motors nach und ist durch das Gesamtträgheitsmoment sowie die Polstellen und die Nullstellen der Übertragungsfunktion des mechanischen Systems aus Motor, Achse und Maschinenelement parametrisiert.

Wesentliche Vorteile der erfindungsgemäßen Vorgehensweise lassen sich wie folgt erläutern:
Zum einen ist die Modellierung des dynamischen Verhaltens einer realen Gesamtachse aus Motor und gekoppeltem Maschinenelement mit einem hohen Maß an Abstraktion verbunden. Die Erstellung des Modells erfordert Expertise und Erfahrung in der Modellbildung, denn die Auswirkungen der verschiedenen beteiligten physikalischen Parameter wie Torsionssteifigkeit, Dämpfungsgrad und Massenträgheit auf das Regelungsverhalten sind nicht immer intuitiv zu erfassen. Durch die Parametrisierung über Polstellen, Nullstellen und Gesamtträgheitsmoment lässt sich die Regelungsnormalform oder auch die Beobachtungsnormalform wesentliche leichter und für den Benutzer anschaulicher erreichen.

Zum anderen sind Anfangswerte für die Modellierungsparameter automatisierbar und aus Messwerten des Gesamtsystems einfacher zu ermitteln, ohne dass auf schwer zu ermittelnde Anfangswerte physikalischer Parameter zurückgegriffen werden muss. Die Modellparameter im Falle der Parametrisierung über Polstellen, Nullstellen und Gesamtträgheitsmoment lassen sich erheblicher einfacher und schneller an den gemessenen Frequenzgang anpassen.

Nicht zuletzt ist bei der Parametrisierung über Polstellen, Nullstellen und Gesamtträgheitsmoment die Regelungsnormalform frei von zu invertierenden Matrizen, so dass die numerische Stabilität zu jedem Regelungszeitpunkt gegeben ist.

Gemäß manchen Ausführungsformen des erfindungsgemäßen Verfahrens werden das Gesamtträgheitsmoment und/oder die Polstellen und die Nullstellen der Übertragungsfunktion aus einer Frequenzkennlinie des dynamischen Verhaltens des Maschinenelements und des Motors ermittelt.

Gemäß manchen Ausführungsformen des erfindungsgemäßen Verfahrens kann das Verfahren in Echtzeit während des Bewegungsvorgangs des Maschinenelements durchgeführt werden.

Gemäß manchen Ausführungsformen des erfindungsgemäßen Verfahrens kann aus dem Gesamtträgheitsmoment der Achse sowie den Polstellen und den Nullstellen der Übertragungsfunktion des mechanischen Systems aus Motor, Achse und Maschinenelement eine Zustandsraumdarstellung des digitalen Streckenmodells, vorzugsweise in Regelungs- oder Beobachtungsnormalform, ermittelt werden. Dabei kann in einigen Ausführungsvarianten das digitale Streckenmodell eine Regelungsstrecke eines linear geregelten digitalen Modells sein.

In solchen Fällen kann es in einigen vorteilhaften Ausführungsformen möglich sein, zur Bildung der Vorsteueristgröße eine über eine Rückführgröße transformierte Ausgangsgröße des digitalen Streckenmodells an einem Eingangssummierer des digitalen Modells von der Führungssollgröße zu subtrahieren. Weiterhin kann es in solchen Fällen in einigen vorteilhaften Ausführungsformen möglich sein, zur Bildung der Führungsistgröße die Ausgangsgröße des digitalen Streckenmodells mit einem Anpassvektor zu multiplizieren.

Gemäß manchen Ausführungsformen des erfindungsgemäßen Verfahrens kann die Führungssollgröße eine Solllage, eine Sollgeschwindigkeit oder eine Sollbeschleunigung des Maschinenelements sein.

Gemäß manchen Ausführungsformen des erfindungsgemäßen Verfahrens kann die bestimmte Vorsteueristgröße und/oder Führungsistgröße in einen Regelkreis zur Regelung des Motors der Maschine eingespeist werden. Dabei kann es vorteilhaft sein, wenn die Führungsistgröße zeitlich verzögert wird, bevor sie in den Regelkreis zur Regelung eines Motors der Maschine eingespeist wird.

Gemäß manchen Ausführungsformen des erfindungsgemäßen Verfahrens kann der Regelkreis einen Lageregler aufweisen, welchem die Differenz aus Führungsistgröße und einer gemessenen Istgröße zur Regelung des Motors zugeführt wird. In einigen Ausführungsvarianten kann der Regelkreis einen Geschwindigkeitsregler aufweisen, dessen Ausgangssignal zu der Vorsteueristgröße zur Steuerung der Höhe des Motorstroms addiert wird.

Das Verfahren kann in besonders vorteilhaften Varianten zur Bewegungsführung eines Maschinenelements einer Werkzeugmaschine, einer Produktionsmaschine oder eines Roboters eingesetzt werden.

Gemäß einigen Ausführungsformen kann ein Computerprogrammprodukt für die numerische Steuerung einer Maschine vorgesehen werden, welches computerausführbare Anweisungen aufweist, die, wenn sie in einer numerischen Maschinensteuereinrichtung ausgeführt werden, ein erfindungsgemäßes Verfahren zur Bewegungsführung eines Maschinenelements der Maschine implementieren.

Die obigen Ausführungsformen und Ausführungsvarianten lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele, Ausführungsformen und/oder Ausführungsvarianten beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:

Fig. 1 eine schematische Darstellung eines Zweimassenschwingers,

Fig. 2 eine schematische Darstellung einer erfindungsgemäßen Einrichtung zur Bewegungsführung eines bewegbaren Maschinenelements einer Maschine,

Fig. 3 ein Informationsflussdiagramm zur Veranschaulichung der allgemeinen Idee der vorliegenden Erfindung, und

Fig. 4 ein Flussdiagramm von Schritten eines erfindungsgemäßen Verfahrens zur Bewegungsführung eines bewegbaren Maschinenelements einer Maschine.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. In den Figuren sind gleiche, funktionsgleiche und gleich wirkende Elemente, Merkmale und Komponenten - sofern nichts anderes ausgeführt ist - jeweils mit denselben Bezugszeichen versehen.

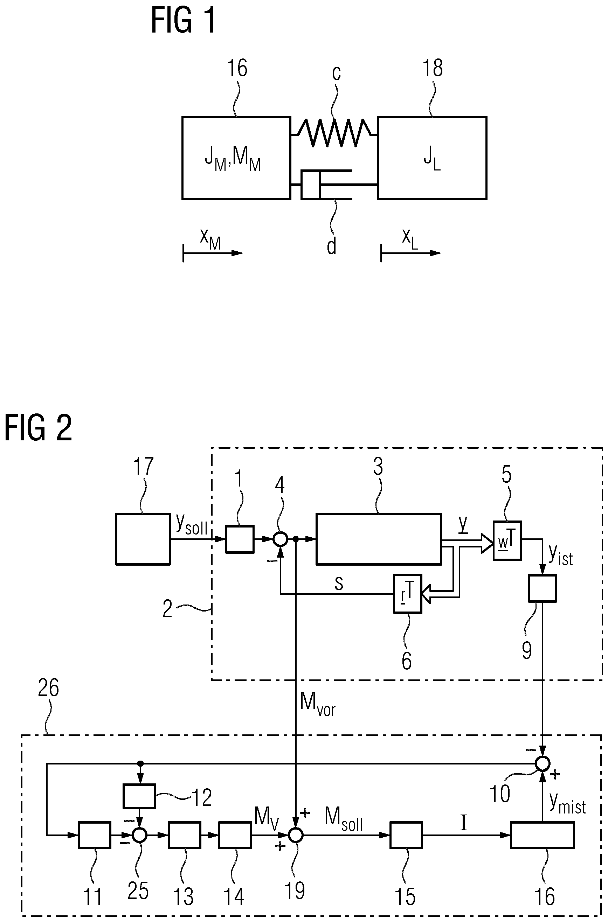

Fig. 1 zeigt die schematische Darstellung eines Zweimassenschwingers bestehend aus einem Motor 16, der mit einer Last 18 über eine Achse verbunden bzw. gekoppelt ist. Die Last 18 kann beispielsweise ein Maschinenelement einer Maschine sein, die durch den Motor antreibbar ist. Der Motor 16 weist eine Motorträgheit $J_M$ und ein Motormoment $M_M$ auf. Die Last 18 bzw. das Maschinenelement 18 weist eine Lastträgheit $J_L$ auf. Die Verbindung entlang der Achse zwischen dem Motor 16 und der Last 18 weist eine Steifigkeit c und eine Dämpfung d auf. Die Verbindung kann z.B. in Form eines Getriebes, einer Antriebsachse oder eines Antriebsstranges vorliegen.

Wenn sich der Rotorlagewinkel $x_M$ des Rotors des Motors 16 verändert, verändert sich unter anderem infolge der endlichen Torsionssteifigheit, insbesondere für den dynamischen Fall die Lastlage $x_L$ nicht wie es durch eine reine Veränderung des Rotorlagewinkels $x_M$ zu erwarten gewesen wäre, sondern die Lastlage $x_L$ vollführt in Bezug auf die im statischen Fall eigentlich zu erwartende Lage in Abhängigkeit vom Rotorlagewinkels $x_M$ Schwingungen.

Die Systemdynamik des in Fig. 1 dargestellten Zweimassenschwingers kann mathematisch mithilfe üblicher Umwandlungsverfahren wie etwa Lagrange-Verfahren, Newton-Euler-Verfahren und dergleichen durch ein lineares System von Differenzialgleichungen beschrieben werden.

$$M \cdot \ddot{X} + D \cdot \dot{X} + K \cdot X = T \cdot f_M \; , \tag{1}$$

wobei M die Massenmatrix, D die Dämpfungsmatrix, K die Torsionssteifigkeitsmatrix, T eine Transformationsmatrix, X der Zustandsvektor und $f_M$ der Eingangssteuervektor des Motors 16 sind. Zusammen mit der holonomen Gleichung

$$u_{Mot} = T^T \cdot X \tag{2}$$

mit dem Ausgangsgrößenvektor $u_{Mot}$, welcher beispielsweise der Rotorlagewinkel $x_M$ sein kann. Da das Zweimassenschwingersystem kausal bzw. realisierbar und die Anzahl m der Nullstellen der Übertragungsfunktion geringer als die Anzahl n der Polstellen der Übertragungsfunktion ist, ergibt sich nach der Überführung in die Zustandsraumdarstellung mittels einer Zerlegung der Systemdifferentialgleichung n-ter Ordnung in n Differentialgleichungen erster Ordnung das Zustandsraummodell mit der Zustandsgleichung

$$\dot{X} = \begin{bmatrix} & & \\ 1 & & 0 \end{bmatrix} X + \begin{bmatrix} \\ 0 \end{bmatrix} f_{Mot} \qquad (3)$$

und der Ausgangsgleichung

$$u_{Mot} = \begin{bmatrix} & & \end{bmatrix} X \qquad (4)$$

Zur Überführung eines Streckenmodells in ein digitales Streckenmodell ist es notwendig, das Zustandsraummodell der Gleichungen (3) und (4) zu diskretisieren. Diese Diskretisierung ist jedoch sehr rechenintensiv, da Invertierungen von Matrizen in der Zustandsraumregelung notwendig sind. Bei einer derartigen Parametrierung der Zustandsmatrix kann es bei steigender Systemordnung jedoch zu numerischen Problemen kommen. Dadurch entstehen unter Umständen unerwünschte Instabilitäten aufgrund von Rundungs- oder Überlauffehlern, die damit zu unkontrollierten Bewegungen der Maschinenachse führen können.

Erfindungsgemäß ist es daher vorgesehen, das Streckenmodell durch eine Parametrisierung über das Gesamtträgheitsmoment sowie die Polstellen und die Nullstellen der Übertragungsfunktion $H_{Mot} = u_{mot}/f_{Mot}$ des mechanischen Systems aus Motor 16, Achse und Maschinenelement 18 in digitale Streckenmodell zu überführen. Die Maschinenachse der Maschine wird dabei durch den Motor 16, durch die Last 18 und durch die Verbindung zwischen dem Motor 16 und der Last 18 mit einer Steifigkeit c und eine Dämpfung d gebildet. Diese Maschinenachse weist ein Gesamtträgheitsmoment $J_G$ auf.

Die zeitdiskrete Übertragungsfunktion lässt sich bei dieser Parametrisierung direkt aus den Parametern schreiben, d.h. den i=1...m konjugiert-komplexen Nullstellenpaaren $z_i$, den j=1...n (>m) konjugiert-komplexen Polstellenpaaren $p_j$ sowie dem Gesamtträgheitsmoment $J_G$ der Maschinenachse:

$$H_{Mot} = \frac{\prod_{i=1}^{m}(z-z_i)(z-\bar{z}_i)}{(J_G(z-1)^2 \prod_{j=1}^{n}(z-p_j)(z-\bar{p}_j)} \qquad (5)$$

Aus der Übertragungsfunktion (5) lassen sich die Koeffizienten der Übertragungsfunktion $a_i$ und $b_i$ berechnen, die dazu genutzt werden können, um die Übertragungsfunktion direkt in das Zustandsraummodell abzuleiten. Hierfür kann entweder die Regelungsnormalform oder die Beobachtungsnormalform verwendet werden. Als Beispiel wird im Folgenden die allgemeine Regelungsnormalform angegeben, mit der Zustandsdifferentialgleichung:

$$\dot{X} = \begin{pmatrix} 0 & 1 & \cdots & 0 & 0 \\ 0 & 0 & \cdots & 0 & 0 \\ 0 & \vdots & \ddots & \vdots & \vdots \\ 0 & 0 & \cdots & 0 & 1 \\ -b_0 & -b_1 & \cdots & -b_{N-2} & -b_{N-1} \end{pmatrix} X + \begin{pmatrix} 0 \\ 0 \\ \vdots \\ 0 \\ 1 \end{pmatrix} f_{Mot} \qquad (6)$$

sowie der algebraischen Ausgangsgleichung

$$u_{Mot} = (a_0 - a_N b_0 \quad a_1 - a_N b_1 \quad \cdots \quad a_{N-2} - a_N b_{N-2} \quad a_{N-1} - a_N b_{N-1}) X + a_N f_{Mot} \qquad (7)$$

Der Vorteil bei dieser Regelungsnormalform besteht darin, dass keinerlei Invertierung von Matrizen notwendig ist, und die numerische Stabilität immer gegeben ist. Außerdem können die Parameter der Parametrisierung direkt in die zeitdiskreten Koeffizienten der Zustandsdifferentialgleichung (6) und der Ausgangsgleichung (7) umgesetzt werden.

Die digitale Streckenmodellbildung ist durch die neue Parametrisierung trivial geworden, denn jedes Merkmal der Übertragungsfunktion $H_{Mot} = u_{Mot}/f_{Mot}$ wird eindeutig parametriert. Es ist demnach für eine Modellierung bzw. eine Anpassung der Modellierung bei einer Änderung von physikalischen Eigenschaften der Achse, des Motors 16 und/oder des Maschinenelementes 18, beispielweise bei einer Montage eines steiferen oder trägeren Maschinenelementes 18, kein Expertenwissen bezüglich der Auswirkungen der Massenmatrix, der Dämpfungsmatrix oder der Torsionssteifigkeitsmatrix zwingend notwendig. Zudem steigt die Komplexität des Zustandsraummodells (6)(7) nicht mit der Systemordnung, denn egal wie viele Frequenzen das Modell beinhaltet, die Systemmatrix der Zustandsdifferentialgleichung (6) muss immer nur elementweise gefüllt werden.

Durch die neuartige Parametrierung über das Gesamtträgheitsmoment sowie die Polstellen und die Nullstellen der Übertragungsfunktion $H_{Mot} = u_{Mot}/f_{Mot}$ wird es möglich, mithilfe eines gemessenen Frequenzganges die Pol- und Nullstellen automatisiert zu identifizieren und die Gesamtträgheit zu ermitteln.

Durch diese Automatisierung der Hauptmerkmalsidentifikation kann eine digitale Streckenmodellbildung ebenfalls automatisiert erfolgen. Dabei kann beispielsweise eine iterative Optimierung der Modellparameter durch Anpassung des modellierten Frequenzganges an den gemessenen Frequenzgang erfolgen, zum Beispiel über eine Minimierung der kleinsten quadratischen Abweichung über die Frequenzen hinweg.

In Fig. 2 ist im Rahmen einer schematischen Darstellung eine erfindungsgemäße Einrichtung zur Bewegungsführung eines bewegbaren Maschinenelements einer Maschine dargestellt. Die Einrichtung kann dabei z.B. in Form einer numerischen Maschinensteuereinrichtung und/oder einer Regeleinrichtung der Maschine vorliegen. Die Einrichtung weist ein Führungsgrößenerzeugungsmittel 17 auf, das eine den gewünschten Bewegungsvorgang des Maschinenelements 18 beschreibende Führungssollgröße $y_{soll}$, etwa eine Führungssolllage, eine Führungssollgeschwindigkeit oder eine Führungssollbeschleunigung, erzeugt an ein Modell 2 als Eingangsgröße abgibt. Das Führungsgrößenerzeugungsmittel 17 kann beispielsweise als Bestandteil der numerischen Steuerung bei Maschinen, wie z.B. Werkzeugmaschinen, Produktionsmaschinen und/oder Robotern handelsüblich vorhanden. Die Führungssollgröße $y_{soll}$ ist dabei eine Größe, die normalerweise direkt als Sollgröße einem nachgeschalteten Regelkreis 26 zugeführt wird, der den Bewegungsvorgang des zu bewegenden Maschinenelements 18 entsprechend der vorgegebenen Führungssollgröße $y_{soll}$ regelt.

Erfindungsgemäß wird nun zwischen den Führungssollgrößenerzeugungsmittel 17 und dem Regelkreis 26 ein Modell 2 zur Bestimmung einer Führungsistgröße $y_{ist}$ und/oder einer Vorsteueristgröße $M_{vor}$ zwischengeschaltet. Die Vorsteueristgröße $M_{vor}$ liegt beispielsweise als Vorsteuermoment vor und die Führungsistgröße $y_{ist}$ kann beispielsweise eine Lagemodellistgröße sein. Das Modell 2 weist dabei das schon oben beschriebene digitale Streckenmodell 3 und einen Zustandsregler auf, der in Form eines Rückführvektors 6 und eines Anpassglieds 1 realisiert ist. Weiterhin weist das Modell 2 einen Anpassvektor w (siehe Bezugszeichen 5) auf.

Das Modell 2 kann beispielsweise ein linear geregeltes Streckenmodell sein, bei dem eine mittels eines Rückführvektors 6 modifizierte Ausgangsgröße des digitalen Streckenmodells 3 auf eine Eingangsgröße des Streckenmodells 3 zurückgeführt wird. Die Ausgangsgröße des digitalen Streckenmodells 3 ist der Zustandsvektor $\gamma$. Mit Hilfe des digitalen Streckenmodells 3 wird das mechanische Verhalten des Motors 16, des Maschinenelements 18 und der mechanischen Verbindung zwischen Motor 16 und Maschinenelement 18 nachgebildet. Das dynamische Verhalten dieses Systems wird über das Gesamtträgheitsmoment sowie die Polstellen und die Nullstellen der Übertragungsfunktion $H_{Mot} = u_{Mot}/f_{Mot}$ parametriert.

Mit Hilfe des Zustandsreglers können unerwünschte Eigenschaften der an der Bewegung beteiligten Elemente vorab ausgeregelt werden. Dabei werden die Vorsteueristgröße $M_{vor}$ sowie die Führungsistgröße $y_{ist}$ bestimmt. Der Rückführvektor r kann einzelne Rückführkoeffizienten r1, r2, r3 und r4 aufweisen (siehe Bezugszeichen 6) und führt durch Multiplikation mit dem Zustandsvektor $\underline{y}$ wieder auf eine skalare Größe s = yrT zurück.

Der zur Erzeugung der skalaren Führungsistgröße $y_{ist}$ notwendige Anpassvektor w, der mit dem Zustandsvektor $\underline{y}$ multipliziert die skalare Führungsistgröße $y_{ist}$ ergibt, kann als Anpasskoeffizienten w1=1 sowie w2...N=0 aufweisen, so dass $y_{ist}$ = ywT.

Der Rückführvektor r kann dabei z.B. so gewählt werden, dass eine einzelne oder mehrere Eigenschwingungsfrequenzen des digitalen Streckenmodells 3 gedämpft werden. Mit Hilfe des Anpassglieds 1, beispielsweise eines Vorfilters, lässt sich die Gesamtverstärkung des Modells 2 beeinflussen. So kann das Anpassglied 1 im einfachsten Fall in einer Multiplikation der Führungssollgröße $y_{soll}$ mit einem konstanten Faktor (z.B. 1,5) bestehen. Mit Hilfe eines Subtrahierers 4 wird die mittels der Rückführgröße r modifizierte Ausgangsgröße $\underline{y}$, d.h. der Zustandsvektor, des digitalen Streckenmodells 3 von der durch das Anpassglied 1 modifizierten Führungssollgröße $y_{soll}$ mit einem Subtrahierer 4 subtrahiert. Dadurch ergibt sich Vorsteueristgröße $M_{vor}$, die dem digitalen Streckenmodell 3 als Eingangsgröße zugeführt wird. Dieses gibt als Ausgangsgröße den Zustandsvektor $\underline{y}$ aus, wobei anschließend mittels des Anpassvektors w die skalare Führungsistgröße $y_{ist}$ erzeugt wird.

Mittels einem dem digitalen Streckenmodell 3 nachgeschalteten Verzögerer kann das Verhalten eines den Motor 16 ansteuernden Leistungsteils (z.B. eines Umrichters), sowie eventuell weiterer im Modell nicht berücksichtigter Verzögerungen, unabhängig vom Entwurf des digitalen Streckenmodells 3 eingebracht werden. Im Beispiel der Fig. 2 wird mit dem nachgeschalteten Verzögerer 9 die Führungsistgröße $y_{ist}$ entsprechend der Verzögerung des Leistungsteils 15, d.h. der Zeit, die das Leistungsteil 15 benötigt, um den Strom I aufzubauen, verzögert und am Ausgang des Verzögerers 9 ausgegeben. Die Verzögerung muss jedoch nicht unbedingt durchgeführt werden.

Die Vorsteueristgröße $M_{vor}$ und die gegebenenfalls verzögerte Führungsistgröße $y_{ist}$ werden in den Regelkreis 26 zur Regelung des Motors 16 eingespeist. Mit Hilfe eines Subtrahierers 10 wird die verzögerte Führungsistgröße $y_{ist}$ von einer beispielsweise von einem Geber gemessenen Istgröße $y_{mist}$ subtrahiert. Die gemessene Istgröße $y_{mist}$ kann zum Beispiel Rotorlagewinkel des Motors 16 sein. Die berechnete Differenz wird von dem Subtrahierer 10 anschließend einem Differenzierer 12 zugeführt, welcher die zeitliche Ableitung ermittelt und an einen Lageregler 11 weiterleitet. Die Ausgangsgrößen des Differenzierers 12 und des Lagereglers 11 werden jeweils invertiert und mit Hilfe eines Addierers 25 addiert. Die Ausgangsgröße des Addierers 25 wird einem Geschwindigkeitsregler 13 als Eingangsgröße zugeführt.

Die Ausgangsgröße des Geschwindigkeitsreglers 13 wird anschließend mit Hilfe eines optionalen Filters 14 gefiltert, um eventuell noch auftretende unerwünschte Eigenschaften im Frequenzgang herauszufiltern. Der Filter 14 gibt das Regleristmoment $M_V$ aus, welches mit einem Addierer 19 zur Vorsteueristgröße $M_{vor}$, d.h. dem Vorsteuermoment, zusammengezählt wird, um das Sollmoment $M_{soll}$ zu erhalten. Das Sollmoment $M_{soll}$ wird anschließend als Eingangsgröße dem Leistungsteil 15 zugeführt, das beispielsweise in Form eines Umrichters mit zugehöriger Ansteuerelektronik vorliegenden kann. Das Leistungsteil 15 wird entsprechend dem Sollmoment $M_{soll}$ zur Einstellung der Höhe des Motorstroms I angesteuert. Dadurch wird über den Motor 16 der Bewegungsvorgang des Maschinenelements 18 dynamisch ausgeregelt angesteuert.

Das in Fig. 2 ausgeführte System mit dem Modell 2 und dem Regelkreis 26 kann beispielsweise für mehrere Maschinenachsen einer Maschine implementiert werden, wobei das spezifische dynamische Verhalten der unterschiedlichen Achsen in den unterschiedlichen Parametern der digitalen Streckenmodelle 3 abgebildet werden kann. Dabei können die Führungssollgrößenerzeugungsmittel 17 für jede Maschinenachse eine zugehörige Führungssollgröße $y_{soll}$ erzeugen und dem jeweilig zugehörigen Modell 2 als Eingangsgröße vorgeben.

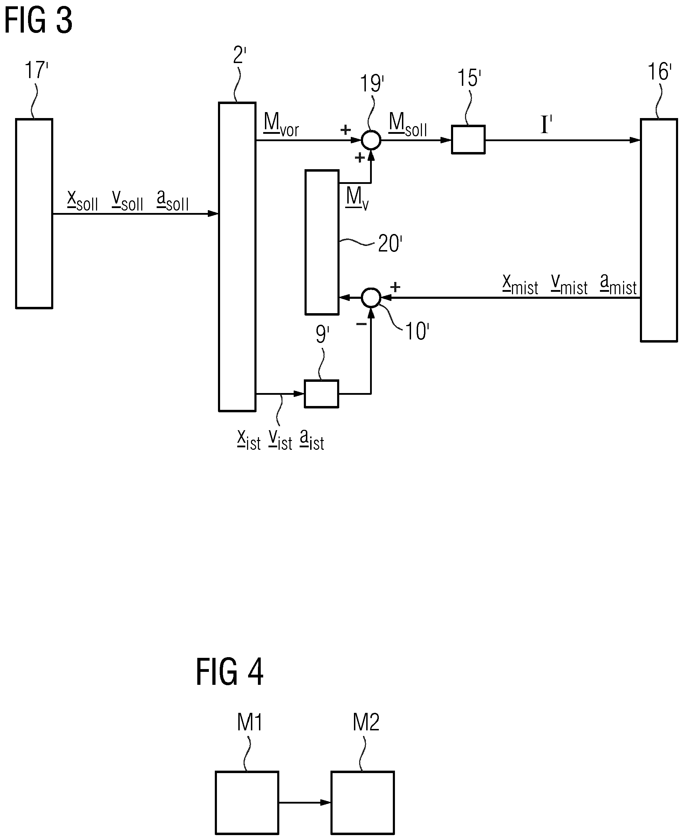

Fig. 3 stellt in schematischer Form ein Informationsflussdiagramm für den allgemeinen Fall dar, bei dem die einzelnen Maschineachsen miteinander verkoppelt sein können. Beispielsweise kann eine Lageänderung einer Maschinenachse automatisch auch eine Lageänderung anderer Maschinenachsen bewirken, wie etwa bei einem Roboterarm mit mehreren Gelenken. Mit Hilfe eines Sollwerterzeugungsmittels 17' werden einzelne oder mehrere Führungssollgrößen wie z. B. eine Solllage $x_{soll}$, eine Sollgeschwindigkeit $v_{soll}$ und/oder eine Sollbeschleunigung $a_{soll}$, einem Modell 2' als Eingangsgrößen vorgegeben. Die einzelnen Größen können dabei, entsprechend der Anzahl der zu bewegenden Maschinenachsen, als Vektor vorliegen. Das Modell 2' ermittelt dabei für die einzelnen Maschinenachsen der Maschine einzelne oder mehrere Führungsistgrößen wie z. B. eine Momentenistgröße $M_{ist}$, eine Geschwindigkeitsistgröße $v_{ist}$ und/oder eine Beschleunigungsistgröße $a_{ist}$. Diese Größen können ebenfalls als Vektor vorliegen. Sie werden mit Hilfe eines Verzögerers 9' entsprechend der zeitlichen Verzögerung des Leistungsteils 15 verzögert.

An dem Motor 16' und/oder von einer anderen Stelle werden gemessene Größen wie z.B. eine gemessene Lageistgröße $x_{mist}$, eine gemessene Geschwindigkeitsistgröße v mist und/oder gemessene Beschleunigungsistgröße $a_{mist}$, wobei die Größen auch als Vektor vorliegen können, von dem vom Modell 2' berechneten verzögerten Führungsgrößen mittels eines Subtrahierers 10' abgezogen und die Differenz einer Regelung 20' zugeführt. Diese ermitteln als Ausgangsgröße das Regelmoment $M_V$, wobei anschließend mittels eines Addierers 19 die Vorsteuergröße $M_{vor}$ von den Regelmoment $M_V$ addiert wird und solchermaßen ein Sollmoment $M_{soll}$ bestimmt wird und als Eingangsgröße einem Leistungsteil 15 zugeführt wird ($M_{vor}$, $M_V$ und $M_{soll}$ können dabei ebenfalls als Vektor vorliegen). Das Leistungsteil 15' liefert dabei die Ströme I' für die einzelnen Motoren 16' zum Bewegen der Maschinenachse der Maschine. Somit kann der allgemeine erfinderische Ansatz auch bei Maschinen, bei denen gekoppelten Maschinenachsen vorliegen, mit Hilfe eines Modells 2', dass auch die Kopplungen der Maschinenachsen berücksichtigt, realisiert werden.

Mit Hilfe der Erfindung kann das aus der Druckschrift DE 10 2005 048 390 A1 bekannte Prinzip der modellbasierten Steuerung, welches das dynamische Verhalten der Bewegung von Maschinenelement entscheidend verbessert, einfacher bedienbar, ohne Expertenwissen anpassbar und aufgrund der besseren Modellqualität wirksamer werden.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

**Patentansprüche**

1.  Verfahren zur Bewegungsführung eines mithilfe eines Motors über eine Achse (16) antreibbaren Maschinenelements (18) einer Maschine mit den Schritten:

    Vorgeben (M1) einer einen gewünschten Bewegungsvorgang des Maschinenelements (18) beschreibenden Führungssollgröße ($y_{soll}$) für die Ansteuerung des Motors (16); und

Bestimmen (M2) einer Vorsteueristgröße ($M_{vor}$) und/oder einer Führungsistgröße ($y_{ist}$) aus der Führungssollgröße ($y_{soll}$) durch Unterwerfen der Führungssollgröße ($y_{soll}$) einem digitalen Streckenmodell (3), welches das dynamische Verhalten des Maschinenelements (18) und des Motors (16) nachbildet,

**dadurch gekennzeichnet, dass**

das digitale Streckenmodell (3) durch das Gesamtträgheitsmoment sowie die Polstellen und die Nullstellen der Übertragungsfunktion ($H_{Mot}$) des mechanischen Systems aus Motor (16), Achse und Maschinenelement (18) parametrisiert ist.

2. Verfahren nach Anspruch 1, wobei das Gesamtträgheitsmoment sowie die Polstellen und die Nullstellen der Übertragungsfunktion ($H_{Mot}$) aus einer Frequenzkennlinie des dynamischen Verhaltens des Maschinenelements (18) und des Motors (16) ermittelt werden.

3. Verfahren nach Anspruch 1 oder 2, wobei das Verfahren in Echtzeit während des Bewegungsvorgangs des Maschinenelements (18) durchgeführt wird.

4. Verfahren nach einem der Ansprüche 1 bis 3, wobei aus dem Gesamtträgheitsmoment der Achse sowie den Polstellen und den Nullstellen der Übertragungsfunktion ($H_{Mot}$) des mechanischen Systems aus Motor (16), Achse und Maschinenelement (18) eine Zustandsraumdarstellung des digitalen Streckenmodells (3) ermittelt wird.

5. Verfahren nach Anspruch 4, wobei die Zustandsraumdarstellung in Regelungs- oder Beobachtungsnormalform ermittelt wird.

6. Verfahren nach Anspruch 4 oder 5, wobei das digitale Streckenmodell (3) eine Regelungsstrecke eines linear geregelten digitalen Modells (2) ist.

7. Verfahren nach Anspruch 6, wobei zur Bildung der Vorsteueristgröße ($M_{vor}$) eine über eine Rückführgröße ($\underline{r}$) transformierte Ausgangsgröße ($\underline{y}$) des digitalen Streckenmodells (3) an einem Eingangssummierer (4) des digitalen Modells (2) von der Führungssollgröße ($y_{soll}$) subtrahiert wird.

8. Verfahren nach einem der Ansprüche 6 und 7, wobei zur Bildung der Führungsistgröße ($y_{ist}$) die Ausgangsgröße ($\underline{y}$) des digitalen Streckenmodells (3) mit einem Anpassvektor ($\underline{w}$) multipliziert wird.

9. Verfahren nach einem der Ansprüche 1 bis 8, wobei die Führungssollgröße ($y_{soll}$) eine Solllage ($x_{soll}$), eine Sollgeschwindigkeit ($v_{soll}$) oder eine Sollbeschleunigung ($a_{soll}$) des Maschinenelements (18) ist.

10. Verfahren nach einem der Ansprüche 1 bis 9, wobei die bestimmte Vorsteueristgröße ($M_{vor}$) und/oder Führungsistgröße ($y_{ist}$) in einen Regelkreis (26) zur Regelung des Motors (16) der Maschine eingespeist wird.

11. Verfahren nach Anspruch 10, wobei die Führungsistgröße ($y_{ist}$) zeitlich verzögert wird, bevor sie in den Regelkreis (26) zur Regelung eines Motors (16) der Maschine eingespeist wird.

12. Verfahren nach einem der Ansprüche 9 und 10, wobei der Regelkreis (26) einen Lageregler (11) aufweist, welchem die Differenz aus Führungsistgröße ($y_{ist}$) und einer gemessenen Istgröße ($y_{mist}$) zur Regelung des Motors (16) zugeführt wird.

13. Verfahren nach einem der Ansprüche 9 bis 11, wobei der Regelkreis (26) einen Geschwindigkeitsregler (13) aufweist, dessen Ausgangssignal ($M_v$) zu der Vorsteueristgröße ($M_{vor}$) zur Steuerung der Höhe des Motorstroms (I) addiert wird.

14. Maschine, mit:

einem Motor (16);
mindestens einem bewegbaren Maschinenelement (18), welches mit dem Motor (16) über eine Achse gekoppelt ist und dessen Bewegung durch den Motor (16) steuerbar ist; und
einer numerischen Maschinensteuereinrichtung, welche dazu ausgelegt ist, eine einen gewünschten Bewegungsvorgang des Maschinenelements (18) beschreibende Führungssollgröße ($y_{soll}$) für die Ansteuerung des Motors (16) auszugeben und eine Vorsteueristgröße ($M_{vor}$) und/oder eine Führungsistgröße ($y_{ist}$) aus der Führungssollgröße ($y_{soll}$) durch Unterwerfen der Führungssollgröße ($y_{soll}$) einem digitalen Streckenmodell (3), welches das dynamische Verhalten des Maschinenelements (18) und des Motors (16) nachbildet, zu bestimmen, **dadurch gekennzeichnet, dass**

das digitale Streckenmodell (3) durch das Gesamtträgheitsmoment sowie die Polstellen und die Nullstellen der Übertragungsfunktion ($H_{Mot}$) des mechanischen Systems aus Motor (16), Achse und Maschinenelement (18) parametrisiert ist.

15. Computerprogrammprodukt für die numerische Steuerung einer Maschine, welches computerausführbare Anweisungen aufweist, die, wenn sie in einer numerischen Maschinensteuereinrichtung ausgeführt werden, ein Verfahren zur Bewegungsführung eines Maschinenelements der Maschine gemäß einem der Ansprüche 1 bis 13 implementieren.

**Claims**

1. Method for guiding the movement of a machine element (18) of a machine that can be driven via an axis (16) with the aid of a motor with the steps:

   specifying (M1) a setpoint guidance variable ($y_{setp}$) describing a desired movement process of the machine element (18) for the actuation of the motor (16); and
   determining (M2) an actual pilot variable ($M_{pilot}$) and/or an actual guidance variable ($y_{act}$) from the setpoint guidance variable ($y_{setp}$) by subjecting the setpoint guidance variable ($y_{setp}$) to a digital path model (3) which simulates the dynamic behaviour of the machine element (18) and the motor (16),
   **characterised in that**
   the digital path model (3) is parameterised by the total moment of inertia and the poles and zeros of the transfer function ($H_{Mot}$) of the mechanical system consisting of motor (16), axis and machine element (18).

2. Method according to claim 1, wherein the total moment of inertia and the poles and zeros of the transfer function ($H_{Mot}$) are ascertained from a frequency characteristic of the dynamic behaviour of the machine element (18) and the motor (16).

3. Method according to claim 1 or 2, wherein the method is performed in real time during the movement process of the machine element (18).

4. Method according to one of claims 1 to 3, wherein a state-space representation of the digital path model (3) is ascertained from the total moment of inertia of the axis and the poles and zeros of the transfer function ($H_{Mot}$) of the mechanical system consisting of motor (16), axis and machine element (18).

5. Method according to claim 4, wherein the state-space representation is ascertained in controllable or observable canonical form.

6. Method according to claim 4 or 5, wherein the digital path model (3) is a regulating path of a linearly regulated digital model (2).

7. Method according to claim 6, wherein an output variable ($\underline{y}$) of the digital path model (3), transformed via a feedback variable (r), is subtracted from the setpoint guidance variable ($y_{setp}$) at an input summator (4) of the digital model (2) in order to form the actual pilot variable ($M_{pilot}$).

8. Method according to one of claims 6 and 7, wherein in order to form the actual guidance variable ($y_{act}$), the output variable ($\underline{y}$) of the digital path model (3) is multiplied by a fitting vector ($\underline{w}$).

9. Method according to one of claims 1 to 8, wherein the setpoint guidance variable ($y_{setp}$) is a setpoint position ($x_{setp}$), a setpoint velocity ($v_{setp}$) or a setpoint acceleration ($a_{setp}$) of the machine element (18) .

10. Method according to one of claims 1 to 9, wherein the actual pilot variable ($M_{pilot}$) and/or actual guidance variable ($y_{act}$) determined is fed into a closed loop (26) for regulating the motor (16) of the machine.

11. Method according to claim 10, wherein the actual guidance variable ($y_{act}$) is delayed in time before being fed into the closed loop (26) for regulating a motor (16) of the machine.

**12.** Method according to one of claims 9 and 10, wherein the closed loop (26) has a position regulator (11) to which the difference between the actual guidance variable ($y_{act}$) and a measured actual variable ($y_{mact}$) is supplied for regulating the motor (16).

**13.** Method according to one of claims 9 to 11, wherein the closed loop (26) has a velocity regulator (13), the output signal ($M_v$) of which is added to the actual pilot variable ($M_{pilot}$) in order to control the level of the motor current (I) .

**14.** Machine with:

a motor (16);
at least one movable machine element (18) which is coupled to the motor (16) via an axis and the movement of which can be controlled by the motor (16); and
a numerical machine control device configured to output a setpoint guidance variable ($y_{setp}$) describing a desired movement process of the machine element (18) for the actuation of the motor (16) and to determine an actual pilot variable ($M_{pilot}$) and/or an actual guidance variable ($y_{act}$) from the setpoint guidance variable ($y_{setp}$) by subjecting the setpoint guidance variable ($y_{setp}$) to a digital path model (3) which simulates the dynamic behaviour of the machine element (18) and the motor (16),
**characterised in that**
the digital path model (3) is parameterised by the total moment of inertia and the poles and zeros of the transfer function ($H_{Mot}$) of the mechanical system consisting of motor (16), axis and machine element (18).

**15.** Computer program product for the numerical control of a machine having computer-executable instructions, which, when they are executed in a numerical machine control device, implement a method for guiding the movement of a machine element of the machine according to one of claims 1 to 13.

**Revendications**

**1.** Procédé de guidage du mouvement d'un élément (18) d'une machine pouvant être entraîné par un axe (16) au moyen d'un moteur comprenant les stades :

prescription (M1) pour la commande du moteur (16) d'une grandeur ($y_{soll}$) de consigne de guidage décrivant une opération de mouvement souhaité de l'élément (18) de la machine ; et
détermination (M2) d'une grandeur ($M_{vor}$) réelle pilote et/ou d'une grandeur ($y_{ist}$) réelle de guidage à partir de la grandeur ($y_{soll}$) de consigne de guidage en soumettant la grandeur ($y_{soll}$) de consigne de guidage à un modèle (3) numérique d'itinéraire, qui représente le comportement dynamique de l'élément (18) de la machine et du moteur (16),
**caractérisé en ce que**
le modèle (3) numérique d'itinéraire est paramétré par le moment d'inertie d'ensemble ainsi que par les points de pôle et les points de zéro de la fonction ($H_{Mot}$) de transfert du système mécanique composé du moteur (16) de l'axe et de l'élément (18) de la machine.

**2.** Procédé suivant la revendication 1, dans lequel on détermine le moment d'inertie d'ensemble ainsi que les points de pôle et les points de zéro de la fonction ($H_{Mot}$) de transfert à partir d'une caractéristique de fréquence du comportement dynamique de l'élément (18) de la machine et du moteur (16).

**3.** Procédé suivant la revendication 1 ou 2, dans lequel on effectue le procédé en temps réel pendant l'opération de mouvement de l'élément (18) de la machine.

**4.** Procédé suivant l'une des revendications 1 à 3, dans lequel à partir du moment d'inertie d'ensemble de l'axe ainsi que des points de pôle et des points de zéro de la fonction ($H_{Mot}$) de transfert du système mécanique composé du moteur (16) de l'axe et de l'élément (18) de la machine, on détermine une représentation spatiale d'état du modèle (3) numérique d'itinéraire.

**5.** Procédé suivant la revendication 4, dans lequel on détermine la représentation spatiale d'état sous une forme normale de régulation ou d'observation.

**6.** Procédé suivant la revendication 4 ou 5, dans lequel le modèle (3) numérique d'itinéraire est un itinéraire de régulation d'un modèle (2) numérique régulé linéairement.

7. Procédé suivant la revendication 6, dans lequel pour la formation de la grandeur ($M_{vor}$) réelle pilote, on soustrait, de la grandeur ($y_{soll}$) de consigne de guidage, une grandeur ($\underline{y}$) de sortie, transformée par une grandeur ($\underline{r}$) de réaction, du modèle (3) numérique d'itinéraire à un sommateur (4) d'entrée du module (2) numérique.

8. Procédé suivant l'une des revendications 6 et 7, dans lequel pour former la grandeur ($y_{ist}$) réelle de guidage, on multiplie la grandeur ($\underline{y}$) de sortie du modèle (3) numérique d'itinéraire par un vecteur ($\underline{w}$) d'adaptation.

9. Procédé suivant l'une des revendications 1 à 8, dans lequel la grandeur ($y_{soll}$) de consigne de guidage est une position ($x_{soll}$) de consigne, une vitesse ($v_{soll}$) de consigne ou une accélération ($a_{soll}$) de consigne de l'élément (18) de la machine.

10. Procédé suivant l'une des revendications 1 à 9, dans lequel on envoie la grandeur ($M_{vor}$) réelle pilote déterminée et/ou la grandeur ($y_{ist}$) réelle de guidage dans un circuit (26) de régulation du moteur (16) de la machine.

11. Procédé suivant la revendication 10, dans lequel on retarde dans le temps la grandeur ($y_{ist}$) réelle de guidage avant de l'envoyer dans le circuit (26) de régulation d'un moteur (16) de la machine.

12. Procédé suivant l'une des revendications 9 et 10, dans lequel le circuit (26) de régulation a un régulateur (11) de position, auquel on envoie pour la régulation du moteur (16) la différence entre la grandeur ($y_{ist}$) réelle de guidage et une grandeur ($y_{mist}$) réelle mesurée.

13. Procédé suivant l'une des revendications 9 à 11, dans lequel le circuit (26) de régulation a un régulateur (13) de vitesse, dont on additionne le signal ($M_v$) de sortie à la grandeur ($M_{vor}$) réelle pilote pour la commande de l'intensité du courant (I) du moteur.

14. Machine, comprenant :

   un moteur (16) ;
   au moins un élément (18) de machine mobile, qui est accouplé au moteur (16) par un axe et dont le mouvement peut être commandé par le moteur (16) ; et
   un dispositif numérique de commande de machine, qui est conçu pour donner pour la commande du moteur (16) une grandeur ($y_{soll}$) de consigne de guidage décrivant une opération de mouvement souhaité de l'élément (18) de la machine et pour déterminer une grandeur ($M_{vor}$) réelle pilote et/ou une grandeur ($y_{ist}$) réelle de guidage, à partir de la grandeur ($y_{soll}$) de consigne de guidage, en soumettant la grandeur ($y_{soll}$) de consigne de guidage à un modèle (3) numérique d'itinéraire, qui représente le comportement dynamique de l'élément (18) de la machine et du moteur (16),
   **caractérisé en ce que**
   le modèle (3) numérique d'itinéraire est paramétré par le moment d'inertie d'ensemble ainsi que par les points de pôle et les points de zéro de la fonction ($H_{Mot}$) de transfert du système mécanique composé du moteur (16) de l'axe et de l'élément (18) de la machine.

15. Produit de programme d'ordinateur pour la commande numérique d'une machine, qui a des instructions pouvant être exécutées par ordinateur qui, lorsqu'elles sont exécutées dans un dispositif numérique de commande de machine, mettent en œuvre un procédé de guidage du mouvement d'un élément de la machine suivant l'une des revendications 1 à 13.

# FIG 1

# FIG 2

# FIG 3

# FIG 4

**IN DER BESCHREIBUNG AUFGEFÜHRTE DOKUMENTE**

**In der Beschreibung aufgeführte Patentdokumente**

- DE 102005036848
- EP 2690513 A1
- EP 2634657 A1
- DE 102005048390 A1